# EUROPEAN PATENT SPECIFICATION

(11) **EP 1 419 324 B1**
(45) Date of publication and mention of the grant of the patent: **12.01.2005**
(21) Application number: 02755156.3
(22) Date of filing: 13.08.2002
(51) Int. Cl.: F16G 11/14

(54) **SUSPENDING EQUIPMENT**
AUFHÄNGEVORRICHTUNG
SUSPENSION DE MATERIEL

(30) Priority: 23.08.2001 GB 0120522; 01.11.2001 GB 0126181
(43) Date of publication of application: 19.05.2004
(73) Proprietor: GRIPPLE LIMITED, Sheffield S4 7UQ (GB)
(72) Inventor: FACEY, Hugh, David, Sheffield S11 9PX (GB); BOALER, Derek, Sheffield S8 8JJ (GB)
(74) Representative: Hulse, Thomas Arnold
(86) International application number: PCT/GB2002/003726
(87) International publication number: WO 2003/019040

(56) References cited:
- EP-A- 0 926 393
- WO-A-00/01958
- DE-U- 29 809 453
- GB-A- 1 369 238
- US-A- 549 069
- US-A- 5 482 341

## Description

This invention relates to means for and methods of suspending equipment (such as lighting, heating, trunking or ventilation units) from an overhead structural member (such as a roof, ceiling, beam or girder).

According to one aspect of the present invention, means for suspending equipment from an overhead structural member comprises a suspension strand and a locking device having twin bores at least one of which is associated with wedging means (e.g. a ball, roller or wedge) preventing withdrawal of the free end of the suspension strand (i.e. the end remote from the nipple) in the opposite direction to insertion, both known per se from EP-A-0 926 393, characterized in that there is provided a nipple at one end of the suspension strand, a toggle plate having a length appreciably greater than its width, an aperture in the toggle plate elongate in the lengthwise direction of the toggle plate but of a width preventing passing of the nipple through the aperture, the free end of the suspension strand being able to pass through the aperture until the toggle plate abuts or lies captive adjacent the nipple.

Thus, in one method of suspending equipment from an overhead structural member in accordance with the invention a hole is provided through the overhead member, the toggle plate is angled into close lengthwise alignment with the suspension strand adjacent the nipple, the toggle plate is passed with the nipple through the hole in the overhead member, and the toggle plate is realigned predominantly perpendicularly to the suspension strand and bridging the topside of the hole, whereafter the free end of the strand is passed through one bore of the locking device, then through an eye provided on the equipment or passed round the equipment, and through the other bore of the locking device wherein the strand is secured by the wedging means.

in another method in accordance with the invention, a hole is provided in the equipment to be suspended, or a supporting member therefor, the angled toggle plate is passed with the nipple through the hole and realigned predominantly perpendicularly to the suspension strand and bridging the underside of the hole, whereafter the free end of the strand is passed through one bore of the locking device, then through an eye provided on the overhead structural member or passed over the member, and through the other bore of the locking device wherein the strand is secured by the wedging means

With either method, the level at which the equipment is suspended can be adjusted upwards by pulling the locking device upwards or downwards, as the case may be, or by pulling the free end of the suspension strand further through the locking device, which may be provided with temporary release means for its wedging means to enable the level at which the equipment is suspended to be adjusted downwards.

The suspension strand may be a length of wire or wire rope, or of any other suitable material, with the nipple formed by a separate member with a hole in which the end of the strand is secured by swaging the whole or part of the separate member, which may be formed with an enlarged formation to abut a substantial area of the toggle plate on each side of the aperture.

Each bore of the locking device may be associated with wedging means, so that the locking device can be used either way up.

An equipment suspension kit in accordance with the invention comprising a suspension strand with a nipple, a toggle plate with an aperture, and a locking device, as aforesaid, may also include plastics sleeving for slipping over part of the suspension strand expected to contact the equipment to be suspended, e.g. to minimise vibration or noise; and a tensioning tool, such as a blind rivetting tool, may be included for tensioning the suspension strand by application of the tool to the free end of the suspension strand after it has passed through the second bore of the locking device.

Embodiments of the invention will now be described, by way of example only, with reference to the accompanying drawings, in which:-
Figure 1 is a side elevation of a suspension strand with a nipple and toggle plate in accordance with the invention;
Figure 2 is an elevation of the upper end of the strand of Figure 1 as seen from the left hand side thereof;
Figure 3 corresponds to Figure 2 but shows the nipple and toggle plate being passed through a hole in an overhead structural member;
Figure 4 corresponds to Figure 3 but shows the toggle plate orientated to prevent withdrawal of the nipple through the hole;
Figure 5 is a downward extension of Figure 4 showing one method in accordance with the invention by which the strand can be used with a locking device to suspend equipment from the overhead structural member;
Figure 6 is an enlarged longitudinal section through the locking device;
Figure 7 is a small scale elevation showing a pair of suspension strands as in Figures 1 to 4 and a pair of locking devices as in Figures 5 and 6 being used in another method in accordance with the invention; and
Figures 8 and 9 are further small scale elevations illustrating two further methods of suspending equipment from overhead structural members in accordance with the invention.

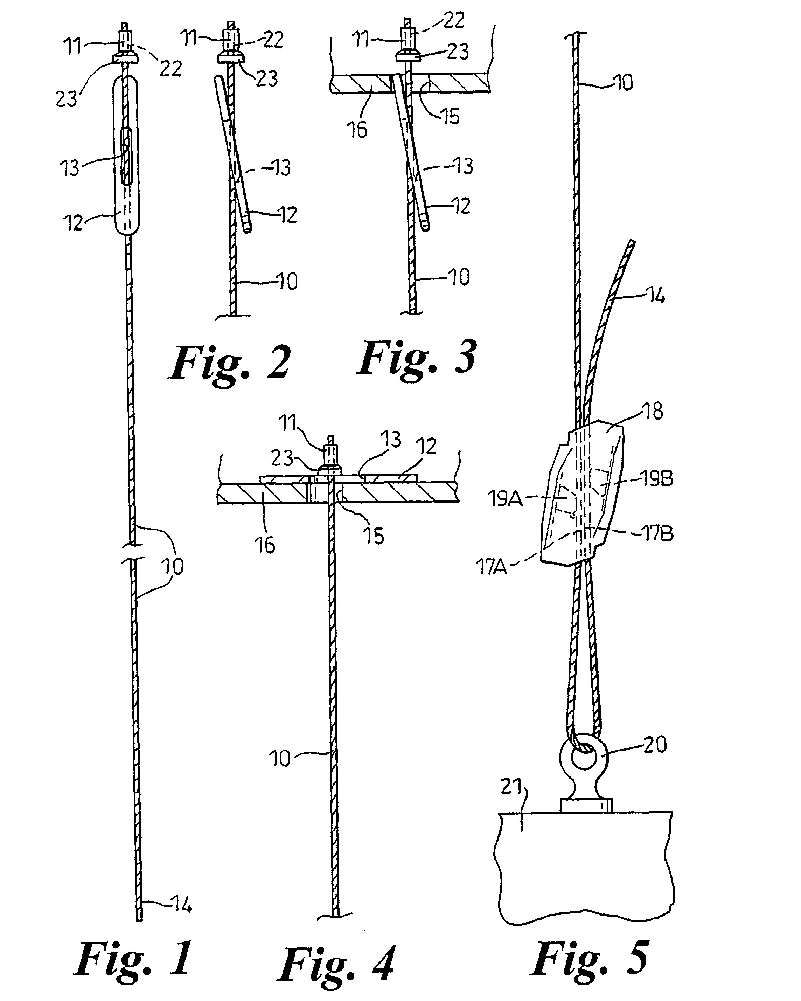

In Figures 1 to 4, a suspension strand 10 formed by a length of wire rope has a nipple 11 at one end, and a toggle plate 12 having a length appreciably greater than its width has an aperture 13 elongate in the lengthwise direction of the toggle plate but of a width preventing passing of the nipple 11 through the aperture, the free end 14 of the strand being passed through the aperture until the toggle plate lies captive adjacent the nipple.

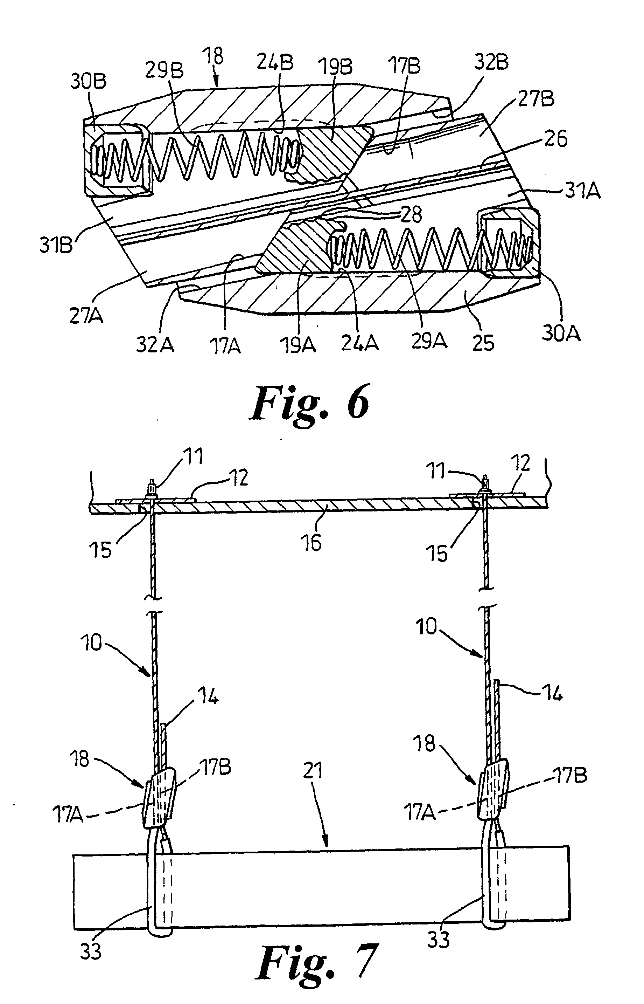

In Figures 1 to 3, the toggle plate 12 is shown angled into close lengthwise alignment with the strand 10 adjacent the nipple 11, to enable the nipple and the toggle plate to be passed through a hole 15 in an overhead structural member 16, as illustrated by Figure 3, and then the toggle plate is realigned predominantly perpendicularly to the strand and bridging the topside of the hole, as shown in Figure 4, whereafter the free end 14 of the strand is passed through one bore 17A of a locking device 18 (see Figures 5 and 6) having twin bores 17A, 17B associated with wedging means 19A, 19B preventing withdrawal of the free end of the strand in the opposite direction to insertion. Further, as illustrated by Figure 5, the free end of the strand can be passed through an eye 20 provided on equipment 21 to be suspended and through the other bore 17B of the locking device 18, to secure the equipment suspended from the overhead structural member.

The nipple 11 is formed by a separate member with a hole 22 in which the end of the strand 10 is secured by swaging part of the separate member, the remainder of which is an enlarged formation 23 to abut a substantial area of the toggle plate 12 on each side of the aperture 13.

Although the wedging means 19B in the bore 17B of the device in the disposition shown in Figure 5 would suffice to secure the equipment 21 suspended from the overhead structural member 16, the provision of wedging means in both bores 17A, 17B is preferred so that the locking device 18 can be used either way up. The level at which the equipment is suspended can be adjusted upwards by pulling the connector upwards or by pulling the free end 14 of the strand further through the locking device, e.g. by means of a tensioning tool (not shown but, for example, a blind rivetting tool). To enable the level to be adjusted downwards the locking device may be provided with temporary release means for its wedging means, as will be exemplified in the following detailed description of the locking device.

As can be seen in Figure 6 the wedging means 19A, 19B comprise wedges slidable along respective channels 24A, 24B in the body 25 of the locking device 18, each channel converging at an acute angle to and into communication with a respective one of the twin bores 17A, 17B (which are separated by a thin wall 26) towards an inlet end 27A or 27B of that respective bore, the wedges 19A, 19B being provided with transverse ribs 28 (or teeth or other surface formations) for gripping engagement with the strand 10 (when inserted) under the urge of compression springs 29A, 29B between the wedges and recessed abutments 30A, 30B adjacent outlet ends 31 A, 31B of the respective bores 17A, 17B. Apertures 32A, 32B in the body 25 of the locking device 18 each have an inner end opening into a respective channel 24A or 24B and is available as a guide for a separate tool(not shown) pushed into the channel to move the respective wedge against its spring urge to enable the strand to be freed temporarily for adjustment of the position of the locking device with respect to the strand and thereby also the level of the suspended equipment 21.

In Figure 7, an item of equipment 21 or a support for an item of equipment is shown suspended by a pair of strands 10 and a pair of locking devices 18 but, instead of providing eyes on the equipment, the free ends 14 of the strands are passed round the equipment after passing through the bores 17A in the devices 18 and before passing through the bores 17B, lengths of plastics sleeving 33 being slipped over parts of the suspension strands where they would otherwise contact the equipment, e.g. to minimise vibration or noise.

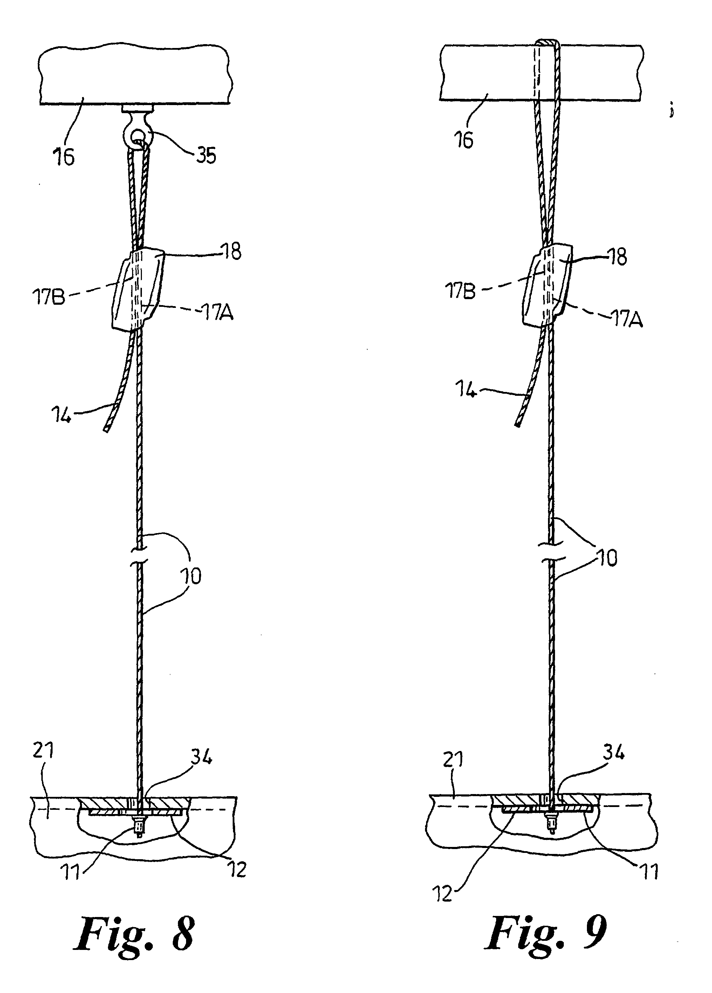

In each of Figures 8 and 9 a hole 34 is provided in the item of equipment 21, the angled toggle plate 12 on the strand 10 is passed with the nipple 11 through the hole and realigned predominantly perpendicularly to the strand and bridging the underside of the hole, whereafter, in Figure 8 the free end 14 of the strand is passed through one bore 17A of the device 18, then through an eye 35 provided on the overhead structural member 16 and through the other bore 17B of the locking device wherein the strand is secured by the wedging means, while in Figure 9 the strand is passed over the member 16 after passing through the bore 17A in the device 18 and before passing through the other bore 17B of the locking device.

The level at which the equipment is suspended in the manner of Figure 8 or Figure 9 can be adjusted upwards by pulling the locking device 18 downwards or by pulling the free end 14 of the suspension strand 10 further through the locking device. Again, temporary release means for the wedging means may be provided as described in relation to Figure 6 to enable the level at which the equipment is suspended to be adjusted downwards.

## Claims

1. Means for suspending equipment (21) from an overhead structural member (16) comprising a suspension strand (10) and a locking device (18) having twin bores (17A, 17B) at least one of which is associated with wedging means (19A or 19B) preventing withdrawal of the free end (14) of the suspension strand (10) in the opposite direction to insertion, **characterized in that** there is provided a nipple (11) at one end of the suspension strand, a toggle plate (12) having a length appreciably greater than its width, an aperture (13) in the toggle plate elongate in the lengthwise direction of the toggle plate but of a width preventing passing of the nipple through the aperture, the free end (14) of the suspension strand (10) being able to pass through the aperture (13) until the toggle plate (12) abuts or lies captive adjacent the nipple (11).

2. Means for suspending equipment as in Claim 1, **characterized in that** the suspension strand (10) is a length of wire or wire rope.

3. Means for suspending equipment as in Claim 1 or Claim 2, **characterized in that** the nipple (11) is formed by a separate member with a hole (22) in which the end of the strand (10) is secured by swaging the whole or part of the separate member.

4. Means for suspending equipment as in Claim 3, **characterized in that** the separate member is formed with an enlarged formation (23) to abut a substantial area of the toggle plate (12) on each side of the aperture (13).

5. Means for suspending equipment as in any one of Claims 1 to 4, **characterized in that** each bore (17A, 17B) of the locking device (18) is associated with wedging means (19A, 19B), so that the locking device (18) can be used either way up.

6. A method of suspending equipment (21) from an overhead structural member (16) using means as in any one of Claims 1 to 5, **characterized in that** a hole (15) is provided through the overhead member (16), the toggle plate (12) is angled into close lengthwise alignment with the suspension strand (10) adjacent the nipple (11), the toggle plate (12) is passed with the nipple (11) through the hole (15) in the overhead member (16), and the toggle plate (12) is realigned predominantly perpendicularly to the suspension strand (10) and bridging the topside of the hole (15), whereafter the free end (14) of the strand (10) is passed through one bore (17A) of the locking device (18), then through an eye (20) provided on the equipment (21) or passed round the equipment, and through the other bore (17B) of the locking device (18) wherein the strand (10) is secured by the wedging means (19B).

7. A method of suspending equipment (21) from an overhead structural member (16) using means as in any one of Claims 1 to 5, **characterized in that** a hole (34) is provided in the equipment (21) to be suspended, the angled toggle plate (12) is passed with the nipple (13) through the hole (34) and realigned predominantly perpendicularly to the suspension strand (10) and bridging the underside of the hole (34), whereafter the free end (14) of the strand (10) is passed through one bore (17A) of the locking device (18), then through an eye (35) provided on the overhead structural member (16) or passed over the member, and through the other bore (17B) of the locking device (18) wherein the strand (10) is secured by the wedging means (19B).

8. A method of suspending equipment in Claim 6 or Claim 7, **characterized in that** the level at which the equipment (21) is suspended is adjusted upwards by pulling the locking device (18) upwards or downwards, as the case may be.

9. A method of suspending equipment as in Claim 6 or Claim 7, **characterized in that** the level at which the equipment (21) is suspended is adjusted upwards by pulling the free end (14) of the suspension strand (10) further through the locking device (18).

10. A method as in any one of Claims 6 to 9, **characterized in that** temporary release means (32A, 32B) is provided for the wedging means (19A, 19B) of the locking device (18) to enable the level at which the equipment (21) is suspended to be adjusted downwards.

11. A method as in Claim 6, with the suspension strand (10) passing round the equipment (21), **characterized in that** plastics sleeving (33) is slipped over part of the suspension strand (10) otherwise expected to contact the equipment.

12. An equipment suspension kit **characterized by** a suspension strand (10) with a nipple, (11) a toggle plate (12) with an aperture (13), and a locking device (18) as in any one of Claims 1 to 5, together with plastics sleeving (33) for slipping over part of the suspension strand (10) expected to contact the equipment (21) to be suspended

## Patentansprüche

1. Mittel zum Aufhängen von Equipment (21) an einem oberen Bauteil (16), mit einem Aufhängeseil (10) und einer Zwillingsbohrungen (17A, 17B) aufweisenden Sperreinrichtung (18), wobei mindestens eine der Zwillingsbohrungen (17A, 17B) mit Keilmitteln (19A, 19B) verbunden ist, die ein Zurückziehen des freien Endes (14) des Aufhängeseils (10) in die dem Einführen entgegengesetzte Richtung verhindern,
**dadurch gekennzeichnet,**
**daß** ein Nippel (11) an einem Ende des Aufhängeseils (10), eine Druckplatte (12), deren Länge großer als ihre Breite ist, und eine Öffnung (13) in der Druckplatte (12), die sich in Längsrichtung der Drückplatte erstreckt mit einer Breite, die das Ziehen des Nippels durch die Öffnung verhindert, vorgesehen sind, wobei das freie Ende (14) des Aufhängeseils (10) durch die Öffnung (13) gezogen werden kann bis die Druckplatte (12) gegen den Nippel (11) stößt oder anliegt.

2. Mittel zum Aufhängen von Equipment nach Anspruch 1, **dadurch gekennzeichnet, daß** das Aufhängeseil (10) aus einem Draht oder Drahtseil besteht.

3. Mittel zum Aufhängen von Equipment nach Anspruch 1 oder 2, **dadurch gekennzeichnet, daß** der Nippel (11) aus einem separaten Bauteil mit einem Loch (22) geformt ist, in den das Ende des Aufhängeseils (10) durch Einschnüren eines Teils oder des gesamten separaten Bauteils gesichert wird.

4. Mittel zum Aufhängen von Equipment nach Anspruch 3, **dadurch gekennzeichnet, daß** das separate Bauteil mit einer vergrößerten Aufstellfläche (23) geformt ist, um an eine erhebliche Fläche der Drückplatte (12) auf beiden Seiten der Öffnung (13) anzustoßen.

5. Mittel zum Aufhängen von Equipment nach einem der Ansprüche 1 bis 4, **dadurch gekennzeichnet, daß** beide Bohrungen (17A, 17B) der Sperreinrichtung (18) mit Keilmitteln (19A, 19B) verbunden ist, so daß die Sperreinrichtung (18) in beiden Richtungen benutzt werden kann.

6. Verfahren zum Aufhängen von Equipment (21) an einem oberen Bauteil (16), mit einem Mittel nach einem der Ansprüche 1 bis 5,
**dadurch gekennzeichnet,**
**daß** ein Loch (15) in dem oberen Bauteil (16) vorgesehen wird, die Drückplatte (12) angrenzend an den Nippel (11) unter geringen Winkel zur Längsrichtung des Aufhängeseils (10) ausgerichtet wird, die Drückplatte (12) mit dem Nippel (11) durch das Loch (15) in dem oberen Bauteil (16) gezogen und die Drückplatte (12) im wesentlichen rechtwinklig zum Aufhängeseil (10) neu ausgerichtet wird und die Oberseite des Loches (15) überspannt,
danach das freie Ende des Aufhängeseils (10) durch die Bohrung (17A) der Sperreinrichtung (18) gezogen und dann durch eine auf dem Equipment (21) vorgesehene Öse (20) oder um das Equipment (21) herum und durch die andere Bohrung (17B) der Sperreinrichtung (18) gezogen wird, wobei das Aufhängeseil (10) durch die Keilmittel (19B) gesichert wird.

7. Verfahren zum Aufhängen von Equipment (21) an einem oberen Bauteil (16), mit einem Mittel nach einem der Ansprüche 1 bis 5,
**dadurch gekennzeichnet,**
**daß** ein Loch (34) in dem aufzuhängende Equipment (21) vorgesehen wird, die angewinkelte Drückplatte (12) mit dem Nippel (11) durch das Loch (34) gezogen und im wesentlichen rechtwinklig zum Aufhängeseil (10) neu ausgerichtet wird und die Unterseite des Loches (34) überspannt,
danach das freie Ende des Aufhängeseils (10) durch die Bohrung (17A) der Sperreinrichtung (18) und dann durch eine an dem oberen Bauteil (16) vorgesehene Öse (35) oder über das Bauteil und durch die andere Bohrung (17B) der Sperreinrichtung (18) gezogen wird, wobei das Aufhängeseil (10) durch die Keilmittel (19B) gesichert wird.

8. Verfahren zum Aufhängen von Equipment (21) nach Anspruch 6 oder 7, **dadurch gekennzeichnet, daß** die Höhe in der das Equipment (21) hängt durch Auf- oder Abwärtsziehen an der Sperreinrichtung (18) nach oben verändert wird, je nach Fall.

9. Verfahren zum Aufhängen von Equipment (21) nach Anspruch 6 oder 7, **dadurch gekennzeichnet, daß** die Höhe in der das Equipment (21) hängt durch Ziehen des freien Endes (14) des Aufhängeseils (10) weiter durch die Sperreinrichtung (18) nach oben verändert wird.

10. Verfahren nach einem der Ansprüche 6 bis 9, **dadurch gekennzeichnet, daß** ein zeitweiliges Freigabemittel (32A, 32B) für die Keilmittel (19A, 19B) der Sperreinrichtung (18) vorgesehen ist, um eine Veränderung der Höhe des Equipments (21) nach unten zu ermöglichen.

11. Verfahren nach Anspruch 6, mit einem um das Equipment (21) gezogenen Aufhängeseil, **dadurch gekennzeichnet, daß** eine Kunststoffhülse (33) über einen Teil des Aufhängeseils (10) gezogen wird, der normalerweise in Kontakt mit dem Equipment kommt.

12. Ausrüstung für eine Aufhängevorrichtung, **gekennzeichnet durch** ein Aufhängeseil (10) mit einen Nippel (11), eine Druckplatte (12) mit einer Öffnung (13) und eine Sperreinrichtung (18), nach einem der Ansprüche 1 bis 5, zusammen mit einer Kunststoffhülse (33), die über einen Teil des Aufhängeseils gezogen wird, der normalerweise in Kontakt mit dem Equipment kommt.

## Revendications

1. Moyens pour suspendre un équipement (21) à un élément structurel vertical (16) comprenant un câble de suspension (10) et un dispositif de blocage (18) possédant deux alésages (17A, 17B), dont un au moins est associé à un moyen de calage (19A ou 19B) empêchant le retrait de l'extrémité libre (14) du câble de suspension (10) dans la direction opposée à l'insertion, **caractérisés en ce que** sont prévus un téton (11) à une extrémité du câble de suspension, un support d'articulation (12) possédant une longueur relativement supérieure à sa largeur, et une ouverture (13) au sein du support d'articulation, s'allongeant dans le sens de la longueur du support d'articulation mais possédant une largeur empêchant le passage de la tige filetée dans l'ouverture, l'extrémité libre (14) du câble de suspension (10) étant capable de passer dans l'ouverture (13) jusqu'à ce que le support d'articulation (12) aboute contre ou soit pris au piège près de la tige filetée (11).

2. Moyens pour suspendre un équipement selon la revendication 1, **caractérisés en ce que** le câble de suspension (10) est une longueur de câble métallique.

3. Moyens pour suspendre un équipement selon la revendication 1 ou la revendication 2, **caractérisés en ce que** la tige filetée (11) est formée par un élément séparé muni d'un trou (22) dans lequel l'extrémité du câble (10) est fixée en sertissant tout ou partie de l'élément séparé.

4. Moyens pour suspendre un équipement selon la revendication 3, **caractérisés en ce que** l'élément séparé est formé avec une formation élargie (23) afin d'abouter contre une zone substantielle du support d'articulation (12) de chaque côté de l'ouverture (13).

5. Moyens pour suspendre un équipement selon l'une quelconque des revendications 1 à 4, **caractérisés en ce que** chaque alésage (17A, 17B) du dispositif de blocage (13) est associé à un moyen de calage (19A, 19B) de telle sorte que le dispositif de blocage (18) puisse être utilisé de n'importe quelle manière vers le haut.

6. Procédé de suspension d'un équipement (21) à un élément structurel vertical (16) utilisant des moyens selon l'une quelconque des revendications 1 à 5, **caractérisé en ce qu'**un trou (15) est prévu dans l'élément vertical (16), le support d'articulation (12) est incliné en étant aligné, dans le sens de la longueur, avec le câble de suspension (10) adjacent à la tige filetée (11), le support d'articulation (12) passe, avec le téton (11), dans le trou (15) de l'élément vertical (16), et le support d'articulation (12) est réaligné principalement perpendiculairement au câble de suspension (10) et en recourbant le côté supérieur du trou (15), après quoi l'extrémité libre (14) du câble (10) est passée dans un alésage ( 17A) du dispositif de blocage (18), puis dans un oeillet (20) prévu sur l'équipement (21), ou autour de l'équipement, puis dans l'autre alésage (17B) du dispositif de blocage (16), dans lequel le câble (10) est fixé par le moyen de calage (19B).

7. Procédé de suspension d'un équipement (21) à un élément structurel vertical (16) utilisant des moyens selon l'une quelconque des revendications 1 à 5, **caractérisé en ce qu'**un trou (34) est prévu dans l'équipement (21) à suspendre, et le support d'articulation incliné (12) est passé, avec la tige filetée (13), dans le trou (34) et est réaligné principalement perpendiculairement au câble de suspension (10) et en recourbant le côté inférieur du trou (34), après quoi l'extrémité libre (14) du câble (10) est passée dans un alésage (17A) du dispositif de blocage (16), puis dans un oeillet (35) prévu sur l'élément structurel vertical (16), ou est passée sur l'élément, et dans l'autre alésage (17B) du dispositif de blocage (18), dans lequel le câble (10) est fixé par le moyen de calage (19B).

8. Procédé de suspension d'un équipement selon la revendication 6 ou la revendication 7, **caractérisé en ce que** le niveau auquel l'équipement (21) est suspendu est ajusté vers le haut en tirant le dispositif de blocage (18) vers le haut ou vers le bas, selon le cas.

9. Procédé de suspension d'un équipement selon la revendication 6 ou la revendication 7, **caractérisé en ce que** le niveau auquel l'équipement (21) est suspendu est ajusté vers le haut en tirant l'extrémité libre (14) du câble de suspension (10) dans le dispositif de blocage (18).

10. Procédé selon l'une quelconque des revendications 6 à 9, **caractérisé en ce qu'**un moyen de libération temporaire (32A, 32B) est prévu pour le moyen de calage (19A, 19B) du dispositif de blocage (18) afin de permettre au niveau auquel l'équipement (21) est suspendu d'être ajusté vers le bas.

11. Procédé selon la revendication 6, avec le câble de suspension (10) passant autour de l'équipement (21), **caractérisé en ce qu'**une gaine en plastique (33) est glissée par-dessus une partie du câble de suspension (10) touchant l'équipement.

12. Kit de suspension d'équipement **caractérisé par** un câble de suspension (10) muni d'une tige filetée (11), d'un support d'articulation (12) possédant une ouverture (13), et d'un dispositif de blocage (18) selon l'une quelconque des revendications 1 à 5, avec une gaine en plastique (33) glissant sur une partie du câble de suspension (10) touchant l'équipement (21) à suspendre.
